# FASCICULE DE BREVET EUROPEEN

(11) **EP 0 766 060 B1**
(45) Date de publication et mention de la délivrance du brevet: **14.08.2002**
(21) Numéro de dépôt: 96402074.7
(22) Date de dépôt: 27.09.1996
(51) Int. Cl.: G01B 7/34, G01N 27/00, H01J 1/00

(54) **Procédé de fabrication de pièces de micromécanique ayant une partie en diamant constituée au moins d'une pointe.**
Herstellung eines mikromechanischen Teils mit mindestens einer Diamantspitze.
Manufacturing a micromechanical part having at least one tip of diamond.

(30) Priorité: 29.09.1995 FR 9511490
(43) Date de publication de la demande: 02.04.1997
(73) Titulaire: CSEM Centre Suisse d'Electronique et de Microtechnique S.A. Recherche et Développement, 2007 Neuchâtel (CH)
(72) Inventeur: Niedermann, Philipp, 2000 Neuchatel (CH); Christoph, Rainer F., 2034 Peseux (CH)
(74) Mandataire: Caron, Gérard

(56) Documents cités:
- EP-A- 0 413 041
- DE-A- 4 232 886
- DE-C- 4 314 301
- US-A- 5 204 210
- US-A- 5 221 415
- PATENT ABSTRACTS OF JAPAN vol. 017, no. 071 (E-1319), 12 Février 1993 & JP 04 274151 A (TOSHIBA CORP), 30 Septembre 1992,
- PATENT ABSTRACTS OF JAPAN vol. 017, no. 626 (P-1647), 18 Novembre 1993 & JP 05 203444 A (SEIKO INSTR INC), 10 Août 1993,
- REVIEW OF SCIENTIFIC INSTRUMENTS, vol. 63, no. 9, 1 Septembre 1992, pages 4053-4055, XP000311657 GERMANN G J ET AL: "DIAMOND FORCE MICROSCOPE TIPS FABRICATED BY CHEMICAL VAPOR DEPOSITION"
- PATENT ABSTRACTS OF JAPAN vol. 017, no. 158 (C-1041), 29 Mars 1993 & JP 04 321596 A (TOYOTA CENTRAL RES & DEV LAB INC), 11 Novembre 1992,

## Description

L'invention est relative à un procédé de fabrication de pièces de micromécanique ayant une partie en diamant constituée au moins d'une pointe, ce procédé étant du genre dans lequel:
- on prépare un substrat, généralement en silicium, par micro-usinage avec traitements appropriés de lithographie et/ou d'attaques anisotropes humides ou sèches, de manière à former une empreinte de la forme désirée pour la partie en diamant,
- on dépose sur le substrat, à la surface de l'empreinte, une couche primaire de fines particules de diamant propres à agir comme germes pour la croissance du diamant, et
- on réalise la partie en diamant par dépôt chimique en phase vapeur du diamant dans l'empreinte par-dessus ladite couche primaire, puis on la sépare au moins en partie du substrat.

L'invention concerne plus particulièrement, mais non exclusivement, un tel procédé pour la fabrication d'un détecteur micromécanique pour microscope à force atomique ou analogue.

Un procédé de ce genre est connu, en particulier d'après US-A-5 221 415 ou d'après EP-B-0 413 041, tandis que dans le US-A-5 204 210, on décrit un procédé par lequel on fait croître une couche de diamant en utilisant des germes constituée par des fines particules de diamant et déposées avant la croissance de la couche de diamant proprement dite.

Dans le cas d'un microscope à force atomique, ou pour des applications similaires, la pointe en diamant réalisée avec une précision largement inférieure au micron, est fixée à l'extrémité d'un levier dont l'autre extrémité est solidaire d'un bloc qui peut être déplacé par des moyens appropriés suivant des distances submicrométriques dans trois directions orthogonales. La pointe en diamant permet d'explorer la surface d'un échantillon et de réaliser, à l'aide de capteurs détectant les déplacements submicrométriques de l'extrémité du levier muni de la pointe, des profils de la topographie de la surface de l'échantillon. Les forces que l'on peut détecter avec un tel système de levier et de pointe sont très faibles et peuvent être de l'ordre du nanonewton (nN).

Pour améliorer la précision des mesures, il est souhaitable que la constante de ressort k du levier ait une valeur appropriée de l'ordre de 1N/m (1 newton/mètre), tandis que la fréquence de résonance du levier doit être relativement élevée, notamment au moins égale à 10 kHz.

Un autre facteur intervenant dans la précision et la sensibilité du détecteur micromécanique est constitué par le rayon de courbure de l'extrémité de la pointe en diamant. Ce rayon de courbure, avec les procédé utilisés actuellement et faisant intervenir une pointe de diamant, a une valeur de l'ordre de 100 nm (100 nanomètres), valeur qu'il est souhaitable de réduire, en particulier pour améliorer la précision d'analyse des surfaces.

L'invention a donc pour but, surtout, de fournir un procédé de fabrication qui permette d'obtenir une pointe en diamant dont l'extrémité présente un rayon de courbure nettement inférieur à 100 nm et avantageusement de l'ordre de 20 nm. L'invention vise aussi à fournir un procédé permettant de réaliser la partie en diamant avec la pointe, dans des conditions fiables et relativement économiques.

L'invention a également pour but de fournir un procédé de fabrication qui permette de réaliser le levier dans de bonnes conditions et d'intégrer aisément la pointe en diamant dans le levier.

Selon l'invention, le procédé de fabrication de pièces de micromécanique du type défini en introduction est caractérisé par le fait que, pour rendre l'empreinte plus pointue avant dépôt du diamant, on forme une couche d'oxyde sur la paroi de l'empreinte, laquelle couche d'oxyde est ensuite éliminée après dépôt du diamant.

Il a été constaté que, grâce à la couche d'oxyde déposée dans l'empreinte, on peut obtenir une cavité plus pointue, car la couche d'oxyde présente une épaisseur moindre dans le fond de la cavité qu'ailleurs.

Le dépôt chimique en phase vapeur a lieu dans un réacteur à une température d'environ 800°C, notamment en présence d'un plasma composé de méthane (CH₄) et d'hydrogène (H2).

De préférence, on réalise une couche de diamant d'épaisseur de l'ordre d'un micromètre.

Dans le cas de la fabrication d'une pièce comportant un levier muni d'une pointe en diamant à une extrémité, ce levier peut être lui-même en diamant; selon le procédé de l'invention la couche primaire de fines particules de diamant est déposée sur toute la surface de l'empreinte y compris celle correspondant au levier, et le levier et la pointe sont réalisés d'un seul tenant en diamant.

Selon une autre possibilité, lorsque la pièce comporte un levier muni d'une pointe en diamant à une extrémité, le levier peut être constitué d'une couche mince en une matière autre que le diamant de la pointe, cette couche mince étant solidaire du substrat et traversée par l'empreinte avant dépôt du diamant de sorte que la pointe en diamant se trouve liée à la couche mince après dépôt du diamant dans l'empreinte.

La couche mince, en particulier en même matière que le substrat, peut être disposée contre une face du substrat dont elle est séparée par une couche intermédiaire, notamment d'oxyde en conformité avec la technologie que l'on désigne habituellement par "silicon on insulator".

Selon une autre possibilité, cette couche mince est constituée par une partie du substrat, en particulier en silicium, dans lequel la structure en diamant a été moulée. Ladite couche mince de silicium, destinée à former le levier, peut être dopée, en particulier au bore, pour arrêter l'attaque chimique du silicium, lors de l'élimination d'une partie du substrat.

Pour réaliser une pointe fine de diamant, on délimite par un masque, sur une face du substrat, une fenêtre circulaire ou sensiblement circulaire, et par une attaque sèche, notamment au plasma, du substrat à travers cette fenêtre, on réalise une empreinte en forme de cône pointu, dans laquelle le dépôt de diamant est effectué. Pour rendre l'empreinte plus pointue avant dépôt du diamant, on peut former par oxydation thermique une couche d'oxyde sur la paroi de l'empreinte, laquelle couche d'oxyde est ensuite éliminée après dépôt du diamant.

Pour réaliser une pointe pyramidale de diamant, d'une manière connue en elle-même, on délimite par un masque sur une face d'un substrat en silicium une fenêtre carrée et, par une attaque humide du substrat en silicium, notamment par KOH, on réalise une empreinte pyramidale renversée (plan 111).

Après dépôt de la couche de diamant, on la recouvre par une structure de support, ou on établit une liaison entre cette couche de diamant et un support approprié.

Le substrat peut être réalisé en silicium, en oxyde de silicium ou équivalent.

La couche de diamant peut être rendue électriquement conductrice pour certaines applications, ou électriquement isolante pour d'autres applications.

La pièce de micromécanique peut comporter une pointe en diamant dont l'extrémité présente un rayon de courbure inférieur ou égal à 20 nm (20 nanomètres).

La pièce peut comporter deux, ou plus de deux, pointes en diamant, en particulier l'une fine en cône pointu, l'autre en pyramide renversée. De préférence alors la pièce comporte deux leviers séparés solidaires d'une même base, associés respectivement à chacune des pointes en diamant.

La pointe pyramidale est destinée, notamment, à réaliser des micro-indentations sur un échantillon, en particulier pour mesure de dureté; le levier de la pointe pyramidale est généralement plus épais que le levier de la pointe fine.

Avantageusement, au moins un élément piézo-résistif ou une jauge de contrainte, est incorporé au levier pour mesure des contraintes mécaniques sur ce levier.

Le ou les éléments piézo-résistifs ou jauges de contrainte sont avantageusement constitués par des zones du(des) levier(s) en silicium ayant subi un traitement approprié.

Lors de la fabrication, la pièce est de préférence attenante par des bras, destinés à être rompus, à des côtés d'une grille portant plusieurs pièces identiques, et destinée à être placée contre une grille de supports de configuration géométrique identique, pour la liaison de l'ensemble des pièces d'une grille avec l'ensemble des supports d'une grille, en particulier par collage ou soudage.

Selon une autre application la pièce est équipée d'une pointe fine en cône aigu en diamant, et cette pointe est disposée comme électrode dans une cavité de forme semblable pratiquée dans une couche de matière appropriée pour former une source d'électrons.

L'invention consiste, mises à part les dispositions exposées ci-dessus, en un certain nombre d'autres dispositions dont il sera plus explicitement question ci-après à propos d'exemples de réalisation décrits avec référence aux dessins ci-annexés, mais qui ne sont nullement limitatifs.

La figure 1, de ces dessins, est un schéma en élévation d'un levier muni d'une pointe en diamant, selon l'invention, fixé sous un support.

Les figures 2A à 2G sont des schémas illustrant des étapes successives du procédé de l'invention pour la fabrication d'une pièce comprenant une pointe fine et un levier en diamant.

Les figures 3A à 3F sont des schémas illustrant les étapes du procédé selon l'invention pour la fabrication d'une pièce comprenant une pointe pyramidale et un levier en diamant.

Les figures 4A à 4H sont des schémas illustrant les étapes successives du procédé pour la fabrication d'une pièce comportant une pointe fine en diamant et un levier en silicium.

Les figures 5A à 5H sont des schémas illustrant les étapes successives du procédé pour la fabrication d'une pièce comportant une pointe pyramidale en diamant et un levier en silicium.

La figure 6 est une coupe schématique verticale longitudinale d'une pièce comprenant un levier et une pointe en diamant selon l'invention, équipée d'une piézo-résistance.

La figure 7 est une vue schématique de dessus d'une pièce comportant deux leviers séparés solidaires d'une même base et équipés respectivement d'une pointe fine et d'une pointe pyramidale, ainsi que de jauges de contrainte.

Les figures 8A à 8C sont des schémas illustrant l'assemblage de pièces de micromécanique et de supports disposés dans des grilles.

La figure 9, enfin, est un schéma d'une source d'électrons équipée d'une pointe fine en diamant.

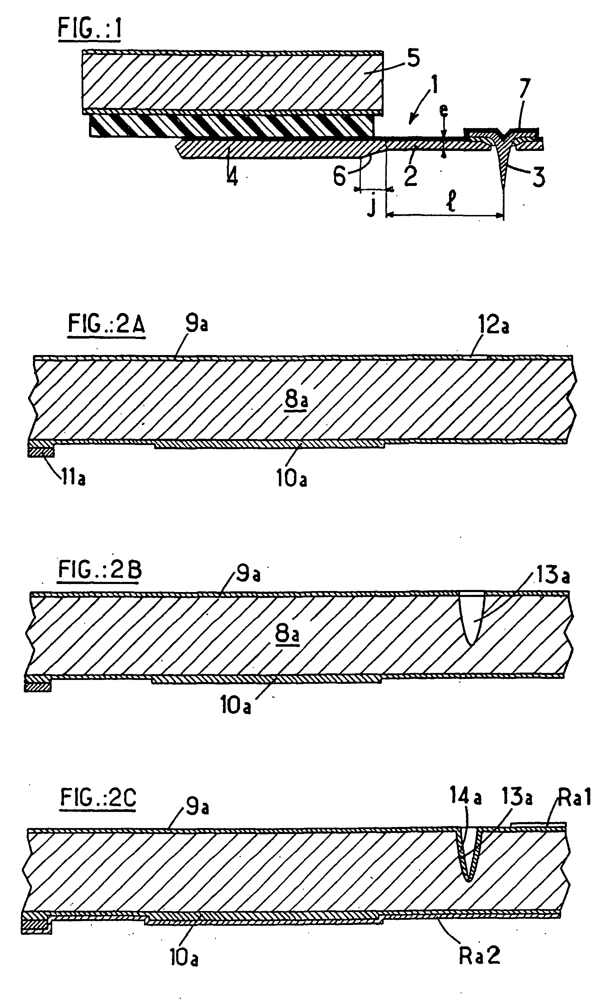

En se reportant à la figure 1 on peut voir, schématiquement représentée, une pièce 1 de micromécanique comprenant un levier 2 (ou poutre) à une extrémité duquel est fixée une pointe en diamant 3. L'extrémité du levier 2 éloignée de la pointe 3 est solidaire d'une base 4, plus épaisse, fixée sous un support 5 de plus fortes dimensions.

La figure 1 est dessinée à très grande échelle, et pour préciser les idées, les ordres de grandeur des dimensions de la pièce sont rappelés ci-après.

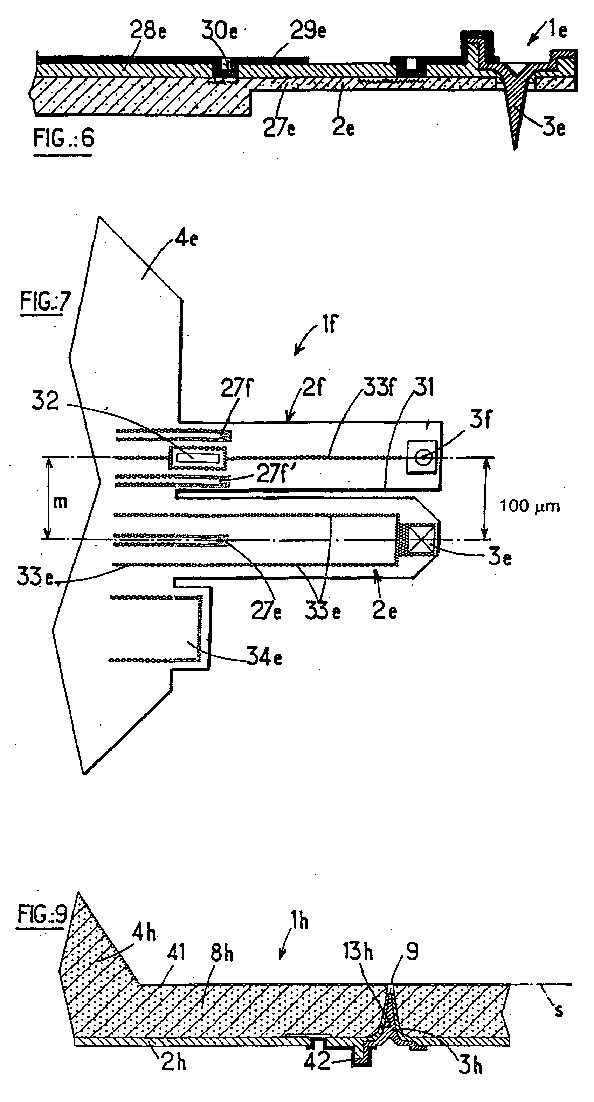

La distance 1 entre l'extrémité de la pointe 3 et le début de la zone d'encastrement de section maximale de la base 4 est de l'ordre de 500 µm (500 micromètres). La longueur j de la zone de transition 6 où la section augmente progressivement entre le levier 2 et la base 4 est de l'ordre de 100 µm. La base 4 est constituée, par exemple, d'une plaquette de forme sensiblement rectangulaire de dimensions 1,6 x 3,5 mm. Cette base 4 peut comporter, perpendiculairement à ses petits côtés, plusieurs leviers 2 parallèles comme illustré sur la figure 7. D'une manière plus générale, les leviers 2 ont une longueur comprise entre 300 et 500 µm, une largeur (dimension suivant la direction perpendiculaire au plan de la figure 1) comprise entre 30 et 100 µm, et une épaisseur e inférieure à 20 µm, typiquement de 2 µm.

La base 4 a une épaisseur supérieure à celle du levier, de l'ordre du double, qui peut atteindre 40 µm. Le support 5, auquel la base est fixée par collage ou soudage, peut avoir une épaisseur de l'ordre de 380 µm qui est celle d'une plaquette de silicium typique.

De telles pièces de micromécanique sont utilisées pour diverses applications dont deux seront citées pour mémoire et pour préciser les idées.

Une première application concerne les microscopes à force atomique qui permettent l'exploration de la surface d'un échantillon et l'obtention d'images de grande précision, par application et déplacement de la pointe 3 contre la surface de l'échantillon. La force d'application de la pointe 3 contre la surface est très faible, de l'ordre du nanonewton et est obtenue par élasticité du levier 2 formant poutre, le support 5 étant déplacé par des moyens à déplacements submicrométriques. La constante de ressort du levier 2 est choisie de l'ordre de 1 N/m, et le déplacement est très faible. Les déplacements sont mesurés par des capteurs appropriés; en particulier, le levier 2 peut comporter une couche réflectrice sur laquelle est dirigé un faisceau laser; la déviation du faisceau réfléchi permet la mesure de la déformation du levier 2 et du déplacement de la pointe 3. Un tel capteur détecte des déplacements à un angström près.

Pour une telle application, on utilise de préférence des pointes 3 en forme de cônes à faible angle au sommet. Pour la précision et la sensibilité des mesures, on souhaite que l'extrémité de la pointe 3 ait un rayon de courbure aussi faible que possible, et inférieur à ceux des appareils de l'art antérieur.

La pointe 3 peut être rendue conductrice électriquement ce qui permet d'effectuer des mesures électriques et de détecter, par exemple, sur la surface de l'échantillon exploré une couche isolante, des zones de conductivité différentes et, plus généralement de détecter certaines propriétés du matériau de l'échantillon dont la surface est explorée par la pointe 3.

Une autre application d'une pièce de micromécanique du genre de celle illustrée sur la figure 1 concerne un "nanoindenteur" qui réalise, dans l'échantillon à étudier, une indentation de très faibles dimensions (nanoindentation) avec la pointe en diamant 3, pour une mesure de la dureté de la surface de l'échantillon. La force exercée sur la pointe 3 est alors plus élevée que celle mise en jeu dans l'application du microscope à force atomique. Pour cette application, il est préférable d'utiliser une pointe 3 pyramidale, c'est-à-dire en forme de pyramide renversée dont la pointe est dirigée vers le bas.

Il est à noter que l'indentation réalisée dans la deuxième application peut être explorée par le microscope à force atomique pour une mesure de topographie.

Les figures 2A à 2G illustrent schématiquement les étapes du procédé pour la fabrication d'une pièce 1a (figure 2G) avec une pointe fine 3a et un levier 2a en diamant, l'extrémité de la pointe 3a ayant un rayon de courbure nettement inférieur à 100 nm, et en particulier inférieur ou égal à 20 nm.

On utilise au départ, comme illustré sur la figure 2A, une plaquette de silicium 8a, double face, dont l'épaisseur est par exemple de 380 µm. On réalise une oxydation des deux faces de la plaquette 8a pour obtenir une couche 9a, 10a d'oxyde de silicium SiO₂ sur chaque face.

On réalise ensuite un dépôt de nitrure de silicium Si₃N₄ sur les deux couches 9a, 10a d'oxyde. L'épaisseur des couches d'oxyde 9a, 10a peut être de l'ordre de 7000 angströms, tandis que l'épaisseur de la couche de nitrure est de l'ordre de 1000 angströms.

On effectue la structuration du nitrure de silicium et de la couche d'oxyde 10a sur la face inférieure.

La structuration consiste à réaliser sur la face concernée un photo-masque, avec une résine appropriée, pour le tracé du contour des zones à conserver ou à enlever, et ensuite à procéder à une gravure, c'est-à-dire à une attaque avec un produit ou moyen approprié, pour enlever une certaine quantité de matière dans les zones non protégées par le photo-masque.

Après cette structuration de la face inférieure, seule la partie d'extrémité gauche de la couche 10a d'oxyde est encore recouverte d'une couche 11a de nitrure de silicium (Fig. 2A).

On procède ensuite au retrait de la couche de nitrure sur la face supérieure et à la structuration de la couche supérieure 9a d'oxyde, avec réalisation d'une fenêtre 12a à contour circulaire, ou sensiblement circulaire, vers l'extrémité droite. La surface de la plaquette 8a de silicium n'est donc plus protégée par la couche 9a au niveau de la fenêtre 12a.

Puis on effectue, au droit de la fenêtre 12a, une attaque sèche anisotrope du silicium. Une telle attaque peut être réalisée au plasma RIE (Reactive Ion Etching ou attaque par ions réactifs), ce plasma comportant un mélange de CHF₃, O₂ et SF₆ dans des proportions expérimentalement définies pour avoir une cavité ou empreinte 13a (Fig. 2B) en forme de cône dont l'angle au sommet est d'environ 10°.

Lors de l'étape suivante, illustrée sur la figure 2C, on effectue une oxydation à basse température et une couche d'oxyde 14a se forme sur la paroi de la cavité 13a ; l'épaisseur de la couche 14a est moindre dans le fond de sorte que l'espace restant de la cavité 13a est plus pointu après formation de cette couche d'oxyde 14a. Une couche de photorésist est déposée sur les faces supérieure Ra1 et inférieure RA2. La couche de photoresist supérieure Ra1 qui est ensuite structurée afin de définir les zones où la croissance du diamant aura lieu.

Puis a lieu l'étape permettant de réaliser une pointe 3a en diamant dont le rayon de courbure de l'extrémité est très faible, de préférence inférieur ou égal à 20 nm.

Dans un bain d'éthanol soumis aux ultrasons et dans lequel se trouve de la poudre de diamant en suspension, on procède alors au dépôt, typiquement pendant 30 mn, d'une couché de préparation composée de fines particules de diamant. Cette opération laisse se déposer des particules de diamant dont la taille est inférieure à 10 nm sur la zone prédéfinie de la plaquette. La densité superficielle de ces particules ou germes est de l'ordre de 10¹⁰/cm².

Puis, les couches de photoresist Ra1 et Ra2 sont enlevées. Ceci élimine les germes de diamant aux endroits où la croissance de diamant ne doit pas avoir lieu.

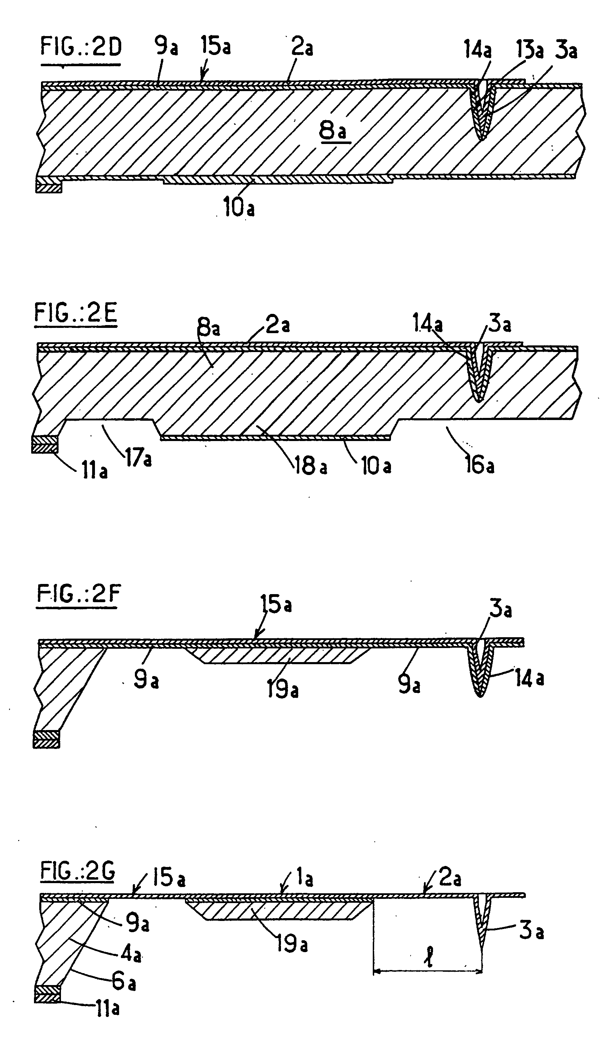

Ensuite dans un réacteur, à une température voisine de 850°C, avec un plasma composé de CH₄ (méthane) et H₂ (hydrogène) à basse pression (ordre de grandeur 10 à 100 mBar) et avec chauffage du substrat constitué par la partie 8a, le plasma étant très hautement excité, on réalise un dépôt chimique en phase vapeur (CVD) faisant croître la couche de diamant pour obtenir une couche 15a (figure 2D). Cette couche 15a forme, en continu, la pointe 3a et le levier 2a.

La pièce est ensuite sortie du réacteur et une opération de gravure de la couche d'oxyde 10a puis du silicium de la plaquette 8a est effectuée pour réaliser un premier évidement 16a dans le silicium au-dessous de la pointe 3a, enrobée par la couche 14a, et un deuxième évidement 17a compris entre la zone revêtue de la couche 11a de nitrure de silicium et une zone centrale 18a dont la face inférieure reste recouverte de la couche d'oxyde 10a.

Lors de l'étape suivante, qui conduit au résultat illustré sur la figure 2F, on enlève la partie restante de la couche inférieure 10a d'oxyde. On effectue ensuite une gravure du silicium à partir de la face inférieure jusqu'à dégager de part et d'autre d'une zone centrale 19a de silicium, qui subsiste, la couche d'oxyde 9.

On réalise alors une gravure de la couche d'oxyde 9a de part et d'autre de cette zone centrale 19a pour éliminer cet oxyde et dégager la pointe 3a et la couche de diamant 15a de part et d'autre de la zone centrale 19a. Les opérations de gravure sont effectuées par attaque chimique.

Une couche métallique, ou une combinaison de couches métalliques, par exemple une couche de titane Ti et une couche d'or (Au) peuvent être déposées sur la surface supérieure du levier et au-dessus de la pointe 3a. Une telle couche métallique permet de faciliter le soudage ou le collage de la pièce avec un support 5 (figure 1) et assure un contact électrique avec la pointe en diamant 3a. En outre, cette couche métallique peut servir de couche réfléchissante pour la détection du déplacement de la pointe 3a et de la déformation du levier 2a par déviation d'un faisceau optique, notamment d'un faisceau laser.

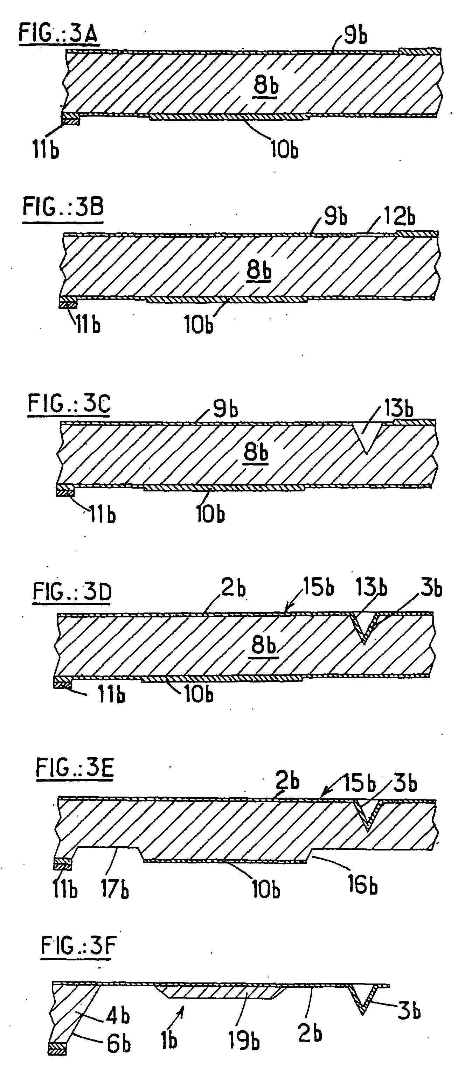

Les figures 3A à 3F illustrent les étapes du procédé pour réaliser une pièce composée d'une pointe pyramidale 3b (figure 3F) et d'un levier 2b en diamant.

L'étape de la figure 3A correspond sensiblement à celle de la figure 2A et la description ne sera pas reprise. Les différentes parties sont désignées par les mêmes chiffres de référence suivis de la lettre b, au lieu de a.

Au cours de l'étape illustrée sur la figure 3B, une opération de photolithographie et de gravure est réalisée sur la couche d'oxyde 9b de la face supérieure de la plaquette 8b pour déterminer une ouverture 12b, à contour carré, dans la couche d'oxyde 9b.

Lors de l'étape suivante, la plaquette 8b de silicium est soumise à gravure ou attaque anisotrope par de l'hydroxyde de potassium (KOH) au niveau de la fenêtre 12b, à une température de l'ordre de 60°C. La progression d'une telle gravure est de l'ordre de 14 µm/h et elle s'arrête sur des plans (111) du silicium. Le résultat de cette gravure se traduit, comme illustré sur la figure 3C, par un évidement 13b en forme de pyramide renversée à base carrée, à angle d'ouverture de 70°5. La durée de l'attaque est fonction de la taille souhaitée pour la pointe 3b et donc pour l'évidement 13b.

Lors de l'étape suivante, on effectue une opération de gravure dans la couche d'oxyde 9b de la face supérieure pour exposer le silicium de la partie 2b formant levier.

On effectue ensuite la mise en place sur la paroi de l'évidement 13b et de l'empreinte correspondant au levier 2b, d'une couche primaire de fines particules de diamant, comme déjà expliqué à propos de la figure 2D, de diamètre inférieur à 10 nm, pour agir comme germes. La pièce est introduite dans le réacteur pour la croissance de la couche de diamant par dépôt en phase vapeur. La couche d'oxyde 9b empêche la nucléation dans les régions autres que celles correspondant aux surfaces de silicium dégagées de cette couche. On obtient la couche en diamant 15b (figure 3D) formant en continu la pointe 3b et le levier 2b.

On effectue ensuite une gravure de la couche d'oxyde 10b inférieure et une gravure du silicium pour aboutir à la configuration de la partie inférieure illustrée sur la figure 3E et semblable à la figure 2E.

On poursuit enfin la gravure de l'oxyde dans la zone centrale de la couche inférieure 10b et la gravure du silicium jusqu'au perçage total pour atteindre le levier 2b. Une zone centrale 19b de silicium subsiste correspondant à une zone dopée -permettant l'arrêt de l'attaque chimique à la jonction p-n.

Le levier 2b associé à une pointe pyramidale 3b peut avoir une épaisseur supérieure à celle d'un levier 2a associé à une pointe fine 3a, notamment en raison des forces plus importantes mises en jeu lorsqu'il s'agit d'effectuer une micro-indentation avec la pointe pyramidale 3b.

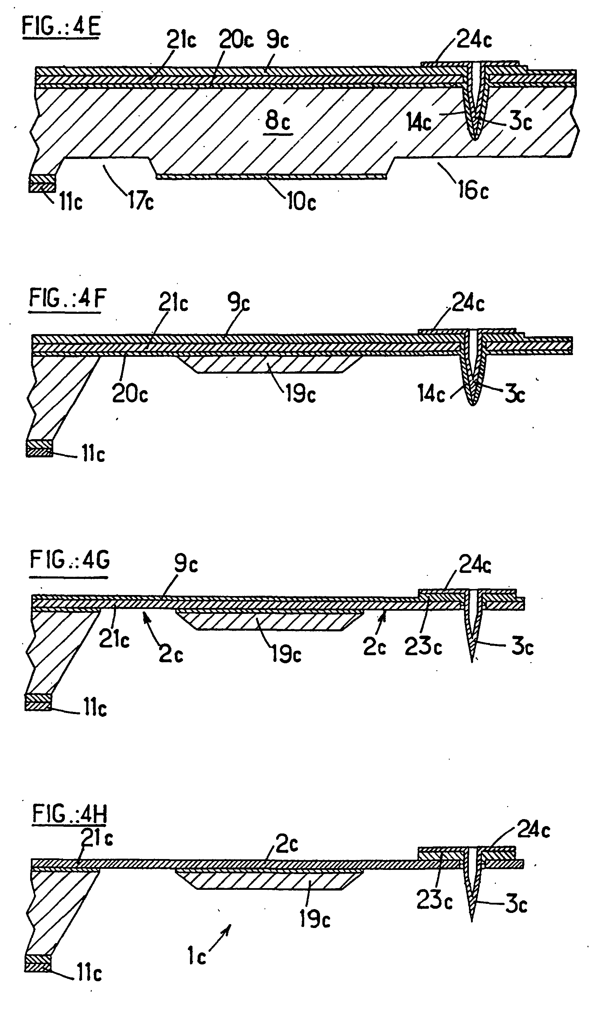

Les figures 4A à 4H concernent la fabrication d'une pièce comportant une pointe fine 3c en diamant et un levier 2c en silicium. On désignera par les mêmes chiffres de référence, suivis de la lettre c au lieu de a, les parties semblables ou analogues à celles déjà décrites à propos des figures 2A à 2G, sans reprendre en détail leur description.

Au début du procédé de fabrication, comme illustré sur la figure 4A, on utilise la combinaison d'une plaquette de silicium 8c sur une face (la face supérieure dans le cas de la figure 4A) de laquelle est formée une couche mince 20c d'oxyde de silicium SiO₂ et, sur cette couche 20c, est déposée une couche de silicium 21c un peu plus épaisse que la couche 20c. A titre indicatif, l'épaisseur de la couche 20c est de l'ordre de 100 nm tandis que l'épaisseur de la couche 21c est de l'ordre de 2 à 20 µm.

Une oxydation est effectuée des deux côtés aboutissant aux couches 9c, 10e d'oxyde de silicium.

Un dépôt de nitrure de silicium est effectué des deux côtés, puis la structuration du nitrure de silicium et de la couche d'oxyde est effectuée sur la face inférieure, ce qui conduit à la partie restante 11c de nitrure de silicium et à la couche 10c d'oxyde de silicium montrée sur la figure 4A.

On effectue ensuite le retrait du nitrure de silicium de la face supérieure et la structuration de la couche d'oxyde 9c de la face supérieure. Puis on réalise, sur cette face supérieure, une photogravure de la couche d'oxyde 9c, de la couche de silicium 21c et de la couche d'oxyde 20c de manière à obtenir la fenêtre 12c à contour circulaire débouchant sur le substrat formé par la plaquette 8c.

On effectue ensuite une attaque sèche anisotrope du silicium du substrat 8c à travers la fenêtre 12c pour obtenir l'évidement conique 13c.

Ensuite, comme illustré sur la figure 4C, on effectue une oxydation à basse température assurant la formation d'une couche d'oxyde 14c dans l'empreinte 13c. On dépose une couche de protection Rc de photorésist sur la face inférieure et une couche de protection 22c de photorésist sur la face supérieure. On effectue ensuite la structuration de la couche supérieure 22c de photorésist, de manière à déterminer les contours de la zone non protégée 23c sur laquelle s'effectuera le dépôt ultérieur de diamant. La zone 23c entoure la base de l'évidement 13c. La configuration obtenue est celle montrée à la figure 4C.

L'étape suivante consiste dans le dépôt de la couche primaire de fines particules de diamant, de diamètre inférieur à 10 nm, dans l'évidement 13c et dans la zone 23c. Puis, on enlève les couches de photoresist Rc et 22c.

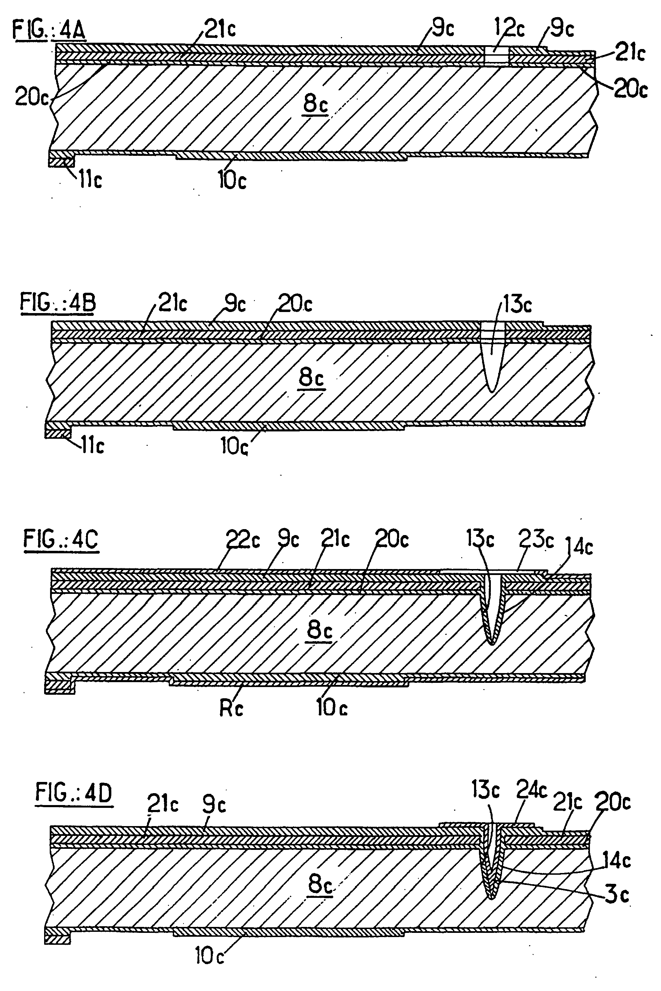

La pièce est ensuite introduite dans le réacteur pour la croissance de la couche de diamant par dépôt en phase vapeur comme déjà expliqué à propos de la figure 2D. A la fin de cette opération on obtient le schéma de la figure 4D où la pointe en diamant 3c se trouve dans le moule délimité par la couche d'oxyde 14c dans l'empreinte 13c. La pointe 3c est solidaire d'une embase 24c en forme de couronne correspondant à la couche de diamant qui s'est formée dans la zone 23c. Cette couronne se trouve liée à la partie de la couche d'oxyde 9c située entre elle et la couche de silicium 21c.

Une opération de gravure de la couche d'oxyde inférieure 10c et du silicium du substrat 8c est ensuite effectuée, comme montré à la figure 4E, d'une manière semblable à celle expliquée pour la figure 2E.

La gravure de la couche d'oxyde inférieure 10c est poursuivie, ainsi que la gravure du silicium du substrat 8c avec arrêt sur la couche d'oxyde 20c, ce qui conduit au schéma de la figure 4F, avec conservation d'une partie centrale de silicium 19c.

On effectue ensuite l'élimination par gravure des zones de la couche d'oxyde 20c situées de part et d'autre de la partie centrale 19c et de la couche supérieure 9c d'oxyde dans les zones déterminées par la structuration. Puis on effectue la gravure de la couche 21c de silicium avec la couche d'oxyde 9c comme masque, pour obtenir le contour souhaité du levier 2c en silicium. Le schéma en coupe de la pièce à la fin de ces traitements est illustré sur la figure 4G.

Enfin, on élimine par gravure l'épaisseur d'oxyde 9c qui subsiste sur la face supérieure du levier 2c en silicium.

On obtient ainsi, en fin de procédé, la pièce schématisée sur la figure 4H avec un levier 2c en silicium et une pointe fine 3c en diamant liée à l'extrémité du levier 2c éloignée de la base 4c.

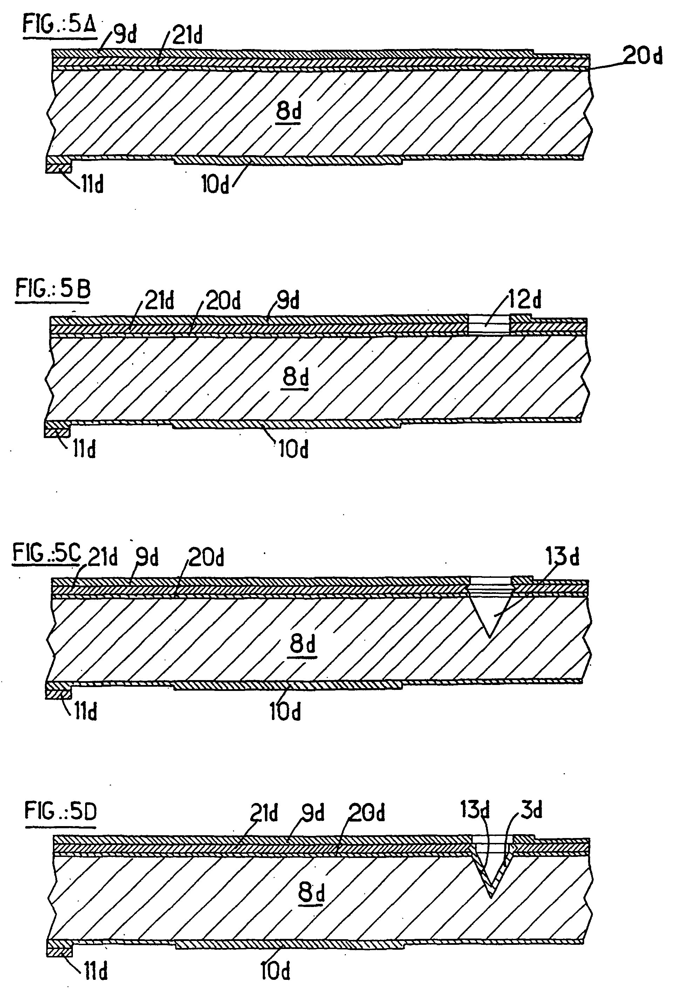

Les figures 5A à 5H concernent la fabrication d'une pièce comportant une pointe pyramidale en diamant 3d fixée à l'extrémité d'un levier 2d en silicium.

Les différentes couches placées sur le substrat 8d au départ sont les mêmes que celles évoquées à propos de la figure 4A et sont représentées sur la figure 5A en étant désignées par les mêmes chiffres de référence suivis des lettres d. Toutefois, dans le cas de la figure 5A l'opération de photolithographie et de gravure de la couche d'oxyde 9d, de la couche de silicium 21d et de la couche d'oxyde 20d n'a pas encore eu lieu.

Lorsque cette opération est terminée, on obtient le schéma de la figure 5B avec une fenêtre 12d, à contour carré, aboutissant sur la face supérieure du substrat en silicium 8d.

A travers cette fenêtre 12d une opération de gravure par voie humide (attaque chimique par KOH) du silicium est réalisée pour obtenir comme dans le cas de la figure 3C, un évidement 13d en forme de pyramide renversée à base carrée.

On effectue ensuite le dépôt de la couche primaire de fines particules de diamant, de diamètre inférieur à 10 nm, sur la surface interne de l'empreinte 13d et la pièce est introduite dans le réacteur pour la croissance de la couche de diamant par dépôt en phase vapeur, comme expliqué à propos de la figure 2D. A la fin de cette étape on obtient le schéma de la figure 5D où la pointe en diamant 3d est formée dans l'empreinte 13d, cette pointe pyramidale 3d étant fixée à sa base dans la couche 21d de silicium.

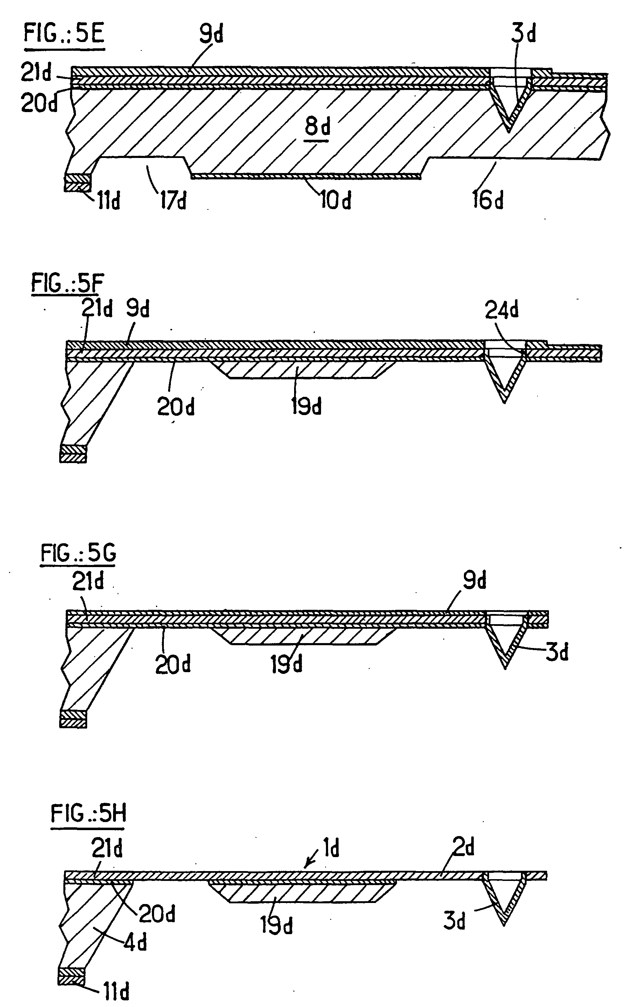

Les figures 5E et 5F correspondent au traitement expliqué à propos des figures 4E et 4F.

La pièce est ensuite soumise à une gravure de la couche d'oxyde 9d et à une gravure de la couche 21d de silicium dans la partie extrême située à droite de la pointe 13d. Le schéma à l'issue de cette opération est celui de la figure 5G.

Enfin, on termine la gravure de la couche d'oxyde 9d, pour l'éliminer complètement, et la gravure de la couche d'oxyde 20d de part et d'autre de la partie centrale de silicium 19d qui subsiste.

La pointe pyramidale 3d présente, comme la pointe 3b, quatre faces avec un angle d'ouverture de 70,5°, et constitue la réplique d'une pyramide obtenue par attaque anisotrope dans le silicium cristallin, et délimitée par des plans (111). Le revêtement de diamant formant la pyramide peut être rendu conducteur par dopage, de préférence par dopage au bore incorporé lors de la phase de dépôt. La conductivité électrique a l'avantage d'éviter les forces électro-statiques qui pourraient autrement interférer lors des mesures. La conductivité permet aussi de détecter l'état de contact avec l'échantillon ou avec une partie conductrice située sous une couche superficielle isolante de l'échantillon.

En variante, comme illustré sur la figure 6, le levier 2e peut contenir une jauge de contrainte 27e formée par une piézo-résistance, située à l'extrémité du levier éloignée de la pointe 3e et voisine de la zone d'encastrement de ce levier 2e dans la base. Cette jauge 27e est prévue du côté de la face supérieure du levier 2e et est constituée de préférence par du silicium cristallin particulièrement approprié pour cette fonction en raison de ses propriétés mécaniques supérieures, et de sa réponse piézo-résistive très sensible. La jauge de contrainte 27e est protégée par une couche isolante 28e; une couche de contact 29e est placée sur la couche de protection 28e qu'elle traverse en 30e pour établir un contact avec la jauge 27e. La couche 29e assure en outre une protection contre la lumière.

La pièce formée par le levier 2e et la pointe conique 3e de la figure 6 est plus particulièrement destinée à la mesure de profils topographiques d'une surface.

Avantageusement, une pièce formée par un levier 2f et une pointe fine 3f (figure 7) du genre décrit à propos des figures 2G et 4H est intégrée sur la même plaquette 4e que celle du levier 2e. Comme il apparaît sur la figure 7, les deux leviers 2e, 2f intégrés sur la même plaquette 4e sont parallèles, en porte-à-faux à partir d'une zone d'encastrement dans la plaquette 4e. La distance m entre les axes des leviers 2e, 2f est de l'ordre de 100 µm.

Les contours des leviers 2e, 2f vus en plan sont rectangulaires à bords longitudinaux parallèles; dans le cas du levier 2e, les angles de l'extrémité externe sont abattus. Un espace libre 31 existe entre les deux bords longitudinaux voisins des leviers 2e, 2f. Une ouverture 32, par exemple à contour rectangulaire, est prévue au voisinage de la base encastrée du levier 2f, suivant son axe, pour augmenter la sensibilité à la torsion de la poutre constituée par ce levier 2f.

Pour la mesure des efforts exercés sur le levier 2f, notamment des efforts de torsion, deux jauges de contrainte 27f, 27f' sont intégrées au voisinage de la base du levier 2f, d'une manière semblable à la jauge 27e, de chaque côté de l'ouverture 32.

Une piste conductrice 33f, notamment obtenue par dopage du substrat en silicium du levier 2f, est prévue suivant l'axe longitudinal du levier pour relier la pointe 3f, conductrice électriquement, à des moyens de mesure; la piste 33f contourne l'ouverture 32 suivant un périmètre rectangulaire.

Des pistes conductrices semblables 33e peuvent être prévues sur le levier 2e pour relier une pointe conductrice 3e à des moyens de mesure.

La plaquette 4e comporte une jauge de référence 34e qui permet de compenser les variations de température au niveau des mesures effectuées avec les jauges de contrainte à piézo-résistance 27e, 27f et 27f'.

Il est à noter que la jauge 27e du levier 2e est disposée suivant son axe, pour les mesures en flexion.

Le levier 2e a des dimensions, notamment une épaisseur, supérieures à celles du levier 2f car il met en oeuvre des forces plus importantes.

Le levier 2f à pointe fine 3f permet de réaliser des images par microscopie à force atomique de la surface de l'échantillon et des indentations réalisées avec la pointe 3e. Le levier 2f permet également de mesurer directement la profondeur de l'indentation réalisée avec la pointe 3e pendant sa réalisation.

Les jauges de référence peuvent être intégrées sur la plaquette 4e, ou bien elles peuvent se trouver en saillie comme illustré sur la figure 7. Cette deuxième option permet de créer des conditions de refroidissement des jauges de contrainte semblables à celles des leviers de mesure.

Il est clair que sur une même plaquette 4e, d'autres leviers et pointes que celles décrites à propos de la figure 7 peuvent être intégrés.

Les jauges de contrainte 27e, 27f, 27f' sont réalisées, au cours du processus de fabrication des leviers, par dopage p de zones ayant une profondeur de 0,5 µm ou moins, représentées sur la figure 7, pour obtenir les résistances. Des régions p+ sont créées pour les contacts électriques des piézo-résistances. Des régions n+ sont définies pour le contact électrique avec le substrat. Les pistes conductrices permettant d'établir les liaisons électriques entre les pointes et les résistances des jauges de contrainte avec les appareils de mesure peuvent aussi être réalisées par dépôt de couches métalliques conductrices.

Les pointes 3f et 3e sont réalisées séquentiellement, la pointe fine 3f en premier puis la pointe pyramidale 3e.

La combinaison des deux pointes 3e et 3f sur des leviers encastrés sur une même plaquette 4e présentent l'avantage de permettre la mesure de la profondeur de l'indentation en mesurant la différence des flexions des deux leviers 2e, 2f lors d'une indentation.

Les deux leviers 2e, 2f peuvent être fabriqués ou bien simultanément à partir d'une même plaquette 4e, ou bien séparément, pour être ensuite réunis sur une même plaquette 4e.

La fabrication des pièces 1 et de leurs supports 5 (figure 1) est réalisée par lots de plusieurs pièces et supports.

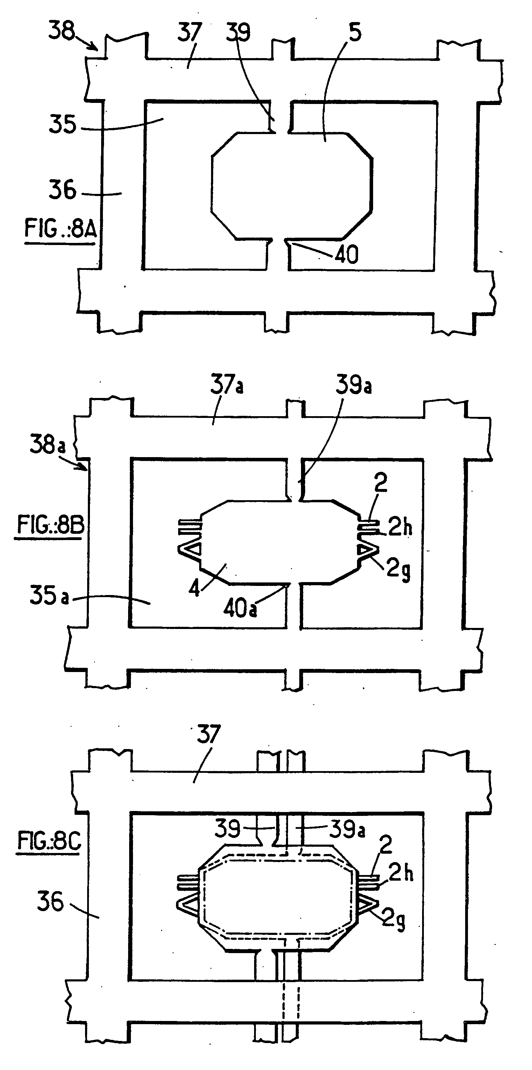

Comme illustré sur la figure 8A, chaque support 5 se trouve à l'intérieur d'une cellule vide rectangulaire 35 délimitée par des branches 36, 37 d'une grille 38 formant cadre de support. La représentation de la figure 8A est à échelle fortement agrandie, les dimensions de la cellule 35 étant de l'ordre de 5 mm x 8 mm.

Le support 5, déjà décrit à propos de la figure 1, a une forme rectangulaire à coins abattus, dont la longueur est disposée parallèlement aux grands côtés de la cellule 36. Les centres du support 5 et de la cellule 35 coïncident. Les grands côtés du support 5 sont reliés aux branches longitudinales 37 par des bras 39 présentant une zone de dimension réduite 40 à la jonction du support 5 pour faciliter, par rupture, la séparation entre le support 5 et les bras 39. Les deux bras 39 situés de part et d'autre du support 5 sont dans le prolongement l'un de l'autre, parallèlement aux petites branches 36 de la grille et sont décalés d'un côté, vers la gauche selon la figure 8A, par rapport à la médiatrice des grands côtés de la cellule 35. On a représenté sur la figure 8A, à l'intérieur du contour du support 5, par une zone plus sombre la surface munie de colle ou de soudure pour la fixation, au support 5, de la plaquette 4 illustrée sur la figure 8B.

La plaquette 4, déjà décrite à propos de la figure 1, a un contour semblable à celui du support 5. Plusieurs leviers tels que 2, 2h (voir figure 6) ou 2g font saillie à partir des petits côtés de la plaquette 4, suivant une direction perpendiculaire à ce petit côté. Le levier 2g a une forme en V et comporte deux bras se rejoignant à la pointe du V où se trouve la pointe en diamant, tandis que les extrémités opposées de ces bras sont encastrées dans la plaquette 4; un tel levier à deux bras 2g donne une meilleure stabilité en torsion.

En pratique, un seul levier subsiste en porte-à-faux à partir d'un petit côté de la plaquette 4.

La plaquette 4 se trouve dans une cellule vide 35a semblable à la cellule 35 de la figure 8A, située à l'intérieur d'une grille 38a dont les branches 36a, 37a entourent à distance la plaquette 4. Cette dernière est reliée, au niveau de ses grands côtés, à des bras 39a plus étroits et moins épais que les bras 39 de la figure 8A. Les bras 39a sont décalés vers la droite de la figuré 8B par rapport à la médiatrice des branches longitudinales 37a. Des zones de rupture 40a sont prévues à la jonction des bras 39a et des grands côtés de la plaquette 4.

Après avoir préparé séparément une grille 38 comportant les supports 5 et une grille 38a comportant les plaquettes 4 avec leurs leviers, et après avoir placé sous les supports 5, les couches de colle ou de soudure, on applique la grille 38 sur la grille 38a comme illustré sur la figure 8C de sorte que chaque support 5 vient recouvrir une plaquette 4 associée. On a représenté sur la figure 8C, par des traits mixtes à l'intérieur du contour du support 5, la surface munie de colle ou de soudure pour la fixation, au support 5, de la plaquette 4 illustrée sur la figure 8B.

Lorsque la liaison est établie par prise de la colle ou de la soudure, entre chaque plaquette 4 et son support 5 correspondant, on peut, en séparant les grilles 38 et 38a provoquer la rupture des bras 39a de plus faible résistance, et obtenir une grille 38 comportant, à l'intérieur de chaque cellule 35, un support 5 auquel est fixée une plaquette 4. On peut ensuite retirer individuellement chaque support 5 de sa cellule 35 par rupture des bras 39.

La figure 9 montre une pièce 1h avec une pointe fine en diamant 3h constituant un nouveau type de source d'électrons. La pointe 3h est du même genre que les pointes fines 3a, 3c précédemment décrites et constitue une cathode. La couche de type-n du substrat 8h en silicium de type-p et la cavité 13h formant le moule sont définies de telle manière que la jonction p-n permettant d'arrêter la gravure ou attaque électrochimique se trouve à un niveau s situé au voisinage ou au-dessus (selon la représentation de la figure 9) de l'extrémité q de la pointe 3h.

Après les étapes du procédé décrites précédemment, une couche 41 dopée-p est implantée sur la surface du substrat 8h au niveau s pour servir d'électrode d'extraction de type-p. Une tension positive appliquée entre l'électrode d'extraction et la pointe en diamant 3h (cathode) permet d'extraire un courant d'électrons de cette pointe.

La pointe 3h est conductrice électriquement et l'électrode de contact 42, représentée sur la figure 9, est située du côté opposé à l'extrémité q.

Les avantages de cette nouvelle structure sont les suivants :
- géométrie grille d'extraction/pointe auto-alignée ;
- faible tension car l'intervalle d'extraction est défini par l'épaisseur d'oxyde ;
- on peut avoir des éléments électroniques intégrés sur la plaquette, ce qui est intéressant par exemple pour faire fonctionner chaque émetteur à des niveaux de courant bien définis ;
- la technique de moulage et de fabrication de la pointe en diamant 3h permet d'obtenir une pointe particulièrement aiguë.

De nombreuses applications sont possibles telles que la détection de champs magnétiques, la microélectronique sous vide, les affichages avec panneaux plats.

## Revendications

1. Procédé de fabrication de pièces de micromécanique (1a-1d) ayant une partie en diamant constituée au moins d'une pointe (3a-3d), en particulier procédé de fabrication d'un détecteur micromécanique pour microscope à force atomique ou analogue,selon lequel:
- on prépare un substrat (8a-8d), généralement en silicium, par micro-usinage avec traitements appropriés de lithographie et/ou d'attaque anisotrope humide ou sèche, de manière à former une empreinte (13a-13d) de la forme désirée pour la partie en diamant,
- on dépose sur le substrat, à la surface de l'empreinte (13a-13d), une couche primaire de fines particules de diamant propres à agir comme germes pour la croissance du diamant, et
- on réalise la partie en diamant par dépôt chimique en phase vapeur du diamant dans l'empreinte par-dessus ladite couche primaire, puis on la sépare au moins en partie du substrat (8a-8d),
**caractérisé par le fait que**, pour rendre l'empreinte (13a, 13c) plus pointue avant dépôt du diamant, on forme une couche d'oxyde (14a, 14c) sur la paroi de l'empreinte, laquelle couche d'oxyde est ensuite éliminée après dépôt du diamant.

2. Procédé selon la revendication 1, **caractérisé par le fait que** l'on réalise une couche de diamant d'épaisseur de l'ordre de 1 micromètre.

3. Procédé selon la revendication 1 ou 2 pour la fabrication d'une pièce comportant un levier (2a, 2b) muni d'une pointe en diamant (3a, 3b) à une extrémité, le levier étant lui-même en diamant, **caractérisé par le fait que** la couche primaire est déposée sur toute la surface de l'empreinte, y compris celle correspondant au levier, et que le levier (2a, 2b) et la pointe (3a, 3b) sont réalisés d'un seul tenant (15a, 15b).

4. Procédé selon la revendication 1 ou 2 pour la fabrication d'une pièce comportant un levier muni d'une pointe en diamant à une extrémité, **caractérisé par le fait que** le levier (2c, 2d) est constitué d'une couche mince (21c, 21d) en une matière autre que le diamant de la pointe, cette couche mince faisant partie du substrat (8c, 8d) et étant traversée par l'empreinte (13c, 13d) avant dépôt du diamant de sorte que la pointe en diamant (3c, 3d) se trouve liée à la couche mince (21c, 21d) après dépôt du diamant dans l'empreinte.

5. Procédé selon la revendication 4, **caractérisé par le fait que** la couche mince (21c, 21d), en particulier en même matière que le substrat (8c, 8d), est disposée contre une face du substrat, dont elle est séparée par une couche intermédiaire (20c, 20d), notamment d'oxyde.

6. Procédé selon la revendication 4, **caractérisé par le fait que** la couche mince est constituée par une partie du substrat, en particulier en silicium, dans lequel la structure en diamant a été moulée.

7. Procédé selon la revendication 6, **caractérisé par le fait que** la couche mince de silicium destinée à former le levier est dopée, en particulier au bore, pour arrêter l'attaque chimique du silicium, lors de l'élimination d'une partie du substrat.

8. Procédé selon l'une des revendications 3 à 7, pour réaliser une pointe fine (3a, 3c) de diamant, **caractérisé par le fait que** l'on délimite par un masque, sur une face du substrat, une fenêtre circulaire (12a, 12c) ou sensiblement circulaire, et que par une attaque sèche, notamment au plasma, du substrat à travers cette fenêtre, on réalise une empreinte (13a, 13c) en forme de cône pointu, dans laquelle le dépôt de diamant est effectué.

9. Procédé selon l'une des revendications 1 à 7, pour réaliser une pointe pyramidale (13b, 13d) de diamant, **caractérisé par le fait que**, d'une manière connue en elle-même, on délimite par un masque sur une face d'un substrat en silicium une fenêtre carrée (12b, 12d), et que par une attaque humide du substrat en silicium, notamment par KOH, on réalise une empreinte (13b, 13d) pyramidale renversée (plans 111).

10. Procédé selon la revendication 1 ou 2, **caractérisé par le fait qu'**après dépôt de la couche de diamant, on la recouvre par une structure de support (5), ou on établit une liaison entre cette couche de diamant et un support approprié (5).

11. Procédé selon la revendication 1 ou 2, **caractérisé par le fait que** le substrat est réalisé en silicium ou en oxyde de silicium.

12. Procédé selon l'une des revendications précédentes **caractérisé par le fait que** la couche de diamant est rendue électriquement conductrice.

13. Procédé selon l'une des revendications 1 à 11, **caractérisé par le fait que** la couche de diamant est rendue électriquement isolante.

14. Procédé selon l'une quelconque des revendications précédentes, **caractérisé en ce qu'**il consiste à munir ladite pièce de deux pointes (3e,3f) en diamant, l'une fine (3f) en cône pointu, l'autre en pyramide renversée (3e).

15. Procédé suivant la revendication 14, **caractérisé en ce qu'**il consiste à former également deux leviers séparés (2e, 2f), solidaires d'une même base, associés respectivement à chacune des pointes en diamant (3e, 3f), le levier (2e) de la pointe pyramidale (3e) étant plus épais que le levier (2f) de la pointe fine (3f).

16. Procédé selon la revendication 14 ou 15, **caractérisé en ce qu'**il consiste à incorporer des éléments piézo-résistifs (27e, 27f) ou des jauges de contraintes, auxdits leviers, pour mesure des contraintes mécaniques.

17. Procédé selon la revendication 16, **caractérisé par le fait que** les éléments piézo-résistifs (27e, 27f) ou les jauges de contraintes sont constitués par des zones du (des) levier(s) en silicium ayant subi un traitement approprié.

18. Procédé selon l'une des revendications 14 à 17, **caractérisé en ce qu'**il consiste à disposer ladite pièce dans une position attenante par des bras (39a), destinés à être rompus, à des côtés (37a) d'une grille (38a) portant plusieurs pièces (4) identiques, et destinée à être placée contre une grille (38) de support de configuration géométrique identique, pour la liaison de l'ensemble des pièces (4a) d'une grille contre l'ensemble des supports (5) d'une grille, en particulier par collage.

19. Procédé selon l'une des revendications 14 à 18, **caractérisé en ce qu'**il consiste à disposer une pointe fine (3h) en cône aigu en diamant comme source d'électrons dans une cavité de forme semblable (13h) pratiquée dans une couche de matière appropriée.

## Patentansprüche

1. Herstellungsverfahren von mikromechanischen Stücken (1a - 1d) mit einem wenigstens aus einer Spitze (3a - 3d) gebildeten Teil aus Diamant, insbesondere Herstellungsverfahren eines mikromechanischen Fühlers für Mikroskope mit Atomkraft oder dergleichen, gemäß dem:
- man durch Mikrobearbeitung mit entsprechenden Lithographiebehandlungen und / oder feuchtem oder trockenem anisotropischem Angriff ein allgemein aus Silizium bestehendes Substrat (8a - 8d) derart herstellt, dass ein Abdruck (13a - 13d) der gewünschten Form für den Teil aus Diamant geformt wird,
- man auf dem Substrat an der Oberfläche des Abdrucks (13a - 13d) eine Primärschicht feiner Diamantpartikel aufbringt, die geeignet sind, als Keime für das Wachstum des Diamanten zu wirken, und
- man den Teil aus Diamant durch chemisches Aufbringen des Diamanten in der Dampfphase in den Abdruck über der besagten Primärschicht realisiert, man sie anschließend wenigstens teilweise vom Substrat (8a - 8d) trennt,
**gekennzeichnet durch** die Tatsache, dass man auf der Wand des Abdrucks eine Oxidschicht (14a, 14c) bildet, die anschließend nach dem Aufbringen des Diamanten eliminiert wird, um den Abdruck (13a, 13c) vor dem Aufbringen des Diamanten spitzer zu machen.

2. Verfahren gemäß Anspruch 1, **gekennzeichnet durch** die Tatsache, dass man eine Diamantenschicht einer Stärke in der Größenordnung vom 1 Mikrometer realisiert.

3. Verfahren gemäß Anspruch 1 oder 2 für die Herstellung eines Stücks mit einem mit an einem Ende mit einer Spitze aus Diamant (3a, 3b) versehenen Hebel (2a, 2b), wobei der Hebel selbst aus Diamant ist, **gekennzeichnet durch** die Tatsache, dass die Primärschicht auf der gesamten Fläche des Abdrucks aufgetragen ist, unter Einschluss der, die dem Hebel entspricht, und dass der Hebel (2a, 2b) und die Spitze (3a, 3b) aus einem einzigen Stück (15a, 15b) realisiert sind.

4. Verfahren gemäß Anspruch 1 oder 2 für die Herstellung eines Stücks mit einem mit an einem Ende mit einer Spitze aus Diamant versehenem Hebel, **gekennzeichnet durch** die Tatsache, dass der Hebel (2c, 2d) aus einer dünnen Schicht (21c, 21d) aus einem anderen Material als dem Diamanten der Spitze gebildet wird, wobei diese dünne Schicht Teil des Substrats (8c, 8d) ist und **durch** den Abdruck (13c, 13d) vor dem Auftragen des Diamanten derart durchdrungen wird, dass die Spitze aus Diamant (3c, 3d) nach dem Aufbringen des Diamanten in dem Abdruck mit der dünnen Schicht (21c, 21d) verbunden ist.

5. Verfahren gemäß Anspruch 4, **gekennzeichnet durch** die Tatsache, dass die insbesondere aus demselben Material wie das Substrat (8c, 8d) bestehende dünne Schicht (21c, 21d) gegen eine Seite des Substrats aufgebracht ist, von der sie **durch** eine Zwischenschicht (20c, 20d), insbesondere aus Oxid, getrennt ist.

6. Verfahren gemäß Anspruch 4, **gekennzeichnet durch** die Tatsache, dass die dünne Schicht **durch** einen Teil des Substrats gebildet wird, insbesondere aus Silizium, in dem die Struktur aus Diamant geformt wurde.

7. Verfahren gemäß Anspruch 6, **gekennzeichnet durch** die Tatsache, dass die zur Bildung des Hebels bestimmte dünne Siliziumschicht geimpft ist, insbesondere mit Bor, um den chemischen Angriff des Siliziums bei der Eliminierung eines Teils des Substrats zu stoppen.

8. Verfahren gemäß Anspruch 3 bis 7 zur Realisierung einer dünnen Diamantenspitze (3a, 3c), **gekennzeichnet durch** die Tatsache, dass man auf einer Seite des Substrats **durch** eine Maske ein kreisförmiges (12a, 12c) oder deutlich rundes Fenster abgrenzt und dass man **durch** einen trockenen Angriff, insbesondere **durch** Plasma, des Substrats **durch** dieses Fenster einen Abdruck (13a, 13c) in zugespitzter Kegelform realisiert, in der das Aufbringen des Diamanten durchgeführt wird.

9. Verfahren gemäß Anspruch 1 bis 7 zur Realisierung einer pyramidenförmigen Diamantenspitze (13b, 13d), **gekennzeichnet durch** die Tatsache, dass man auf an sich bekannte Weise auf einer Seite eines Substrats aus Silizium **durch** eine Maske ein quadratisches (12b, 12d) Fenster abgrenzt und man **durch** einen feuchten Angriff des Substrats aus Silizium, insbesondere **durch** KOH, einen Abdruck (13b, 13d) in umgekehrter Pyramidenform (Pläne 111) realisiert.

10. Verfahren gemäß Anspruch 1 oder 2, **gekennzeichnet durch** die Tatsache, dass man nach dem Aufbringen der Diamantschicht diese **durch** eine Trägerstruktur (5) abdeckt oder man eine Verbindung zwischen dieser Diamantschicht und einem geeigneten (5) Träger herstellt.

11. Verfahren gemäß Anspruch 1 oder 2, **gekennzeichnet durch** die Tatsache, dass das Substrat aus Silizium oder aus Siliziumoxid realisiert ist.

12. Verfahren gemäß einem der vorgenannten Ansprüche, **gekennzeichnet durch** die Tatsache, dass die Diamantschicht elektrisch leitend gemacht wird.

13. Verfahren gemäß Anspruch 1 bis 11, **gekennzeichnet durch** die Tatsache, dass die Diamantschicht elektrisch isolierend gemacht wird.

14. Verfahren gemäß einem der vorgenannten Ansprüche, **dadurch gekennzeichnet, dass** es darin besteht, das besagte Stück mit zwei Spitzen (3e, 3f) aus Diamant zu versehen, wobei eine dünn (3f) in zugespitzter Kegelform ist, die andere in umgekehrter Pyramidenform (3e).

15. Verfahren gemäß Anspruch 14, **dadurch gekennzeichnet, dass** es darin besteht, ebenfalls zwei getrennte (2e, 2f), mit ein und derselben Basis fest verbundene, jeweils jeder Spitze aus Diamant (3e, 3f) zugeordnete Hebel zu bilden, wobei der Hebel (2a) der pyramidenförmigen Spitze (3e) dicker ist als der Hebel (12f) der dünnen Spitze (3f).

16. Verfahren gemäß Anspruch 14 oder 15, **dadurch gekennzeichnet, dass** es darin besteht, zur Messung der mechanischen Beanspruchungen piezoresistive (27e, 27f) Elemente oder Dehnungsmessgeräte in die besagten Hebel zu integrieren.

17. Verfahren gemäß Anspruch 16, **gekennzeichnet durch** die Tatsache, dass die piezoresistiven (27e, 27f) Elemente oder die Dehnungsmessgeräte **durch** Bereiche des Hebels / der Hebel aus einem entsprechend behandelten Silizium gebildet werden.

18. Verfahren gemäß Anspruch 14 bis 17, **dadurch gekennzeichnet, dass** es darin besteht, durch zum Brechen bestimmte Arme (39a) das besagte Stück in eine den Seiten (37a) eines mehrere identische Stücke (4) tragenden Gitters (38a) anliegende Position zu bringen, wobei das Stück dazu bestimmt ist, für die Verbindung des Aufbaus der Stücke (4a) eines Gitters gegen den Aufbau der Träger (5) eines Gitters, insbesondere durch Verklebung, gegen ein Stützgitter (38) identischer geometrischer Konfiguration platziert zu werden.

19. Verfahren gemäß Anspruch 14 bis 18, **dadurch gekennzeichnet, dass** es darin besteht, eine zugespitzte kegelförmige dünne Spitze (3h) aus Diamant als Elektronenquelle in einer in einer Schicht aus geeignetem Material praktizierten Aussparung ähnlicher Form (13h) aufzubringen.

## Claims

1. A process for manufacturing micromechanical components (1a-1d) having a part made of diamond, consisting of at least one tip (3a-3d), in particular a process for manufacturing a micromechanical detector for an atomic force microscope or the like, in which:
- a substrate (8a-8d), generally a silicon substrate, is prepared by micromachining using suitable lithographic and/or wet or dry anisotropic etching treatments, so as to form an impression (13a-13d) of the desired shape for the part made of diamond,
- a primary film of fine diamond particles suitable to act as seeds for growth of the diamond are deposited on the substrate, on the surface of the impression (13a-13d),
- the part made of diamond is produced by chemical vapor deposition of diamond in the impression onto said primary film and the part is then separated at least partially from the substrate (8a-8d),
**characterized in that**, in order to make the impression (13a, 13c) more pointed before deposition of the diamond, an oxide film (14a, 14c) is formed on the wall of the impression, which oxide film is then removed after deposition of the diamond.

2. The process as claimed in claim 1, **characterized in that** a diamond film having a thickness of the order of 1 micrometer is produced.

3. The process as claimed in either of claims 1 and 2 for the manufacture of a component comprising a lever (2a, 2b) provided with a diamond tip (3a, 3b) at one end, the lever itself being made of diamond, **characterized in that** the primary film is deposited over the entire surface of the impression, including that corresponding to the lever, and **in that** the lever (2a, 2b) and the tip (3a, 3b) are produced as a single piece (15a, 15b).

4. The process as claimed in either of claims 1 and 2 for the manufacture of a component comprising a lever provided with a diamond tip at one end, **characterized in that** the lever (2c, 2d) consists of a thin film (21c, 21d) of a material other than the diamond of the tip, this thin film forming part of the substrate (8c, 8d) and being penetrated by the impression (13c, 13d) before deposition of the diamond so that the diamond tip (3c, 3d) is bonded to the thin film (21c, 21d) after deposition of the diamond in the impression.

5. The process as claimed in claim 4, **characterized in that** the thin film (21c, 21d), in particular made of the same material as the substrate (8c, 8d), is placed against one face of the substrate, from which it is separated by an intermediate film (20c, 20d), especially of oxide.

6. The process as claimed in claim 4, **characterized in that** the thin film consists of part of the substrate, in particular a silicon substrate, in which the diamond structure has been molded.

7. The process as claimed in claim 6, **characterized in that** the thin silicon film intended to form the lever is doped, in particular with boron, in order to stop the chemical etching of the silicon, during removal of part of the substrate.

8. The process as claimed in one of claims 3 to 7 for producing a fine diamond tip (3a, 3c), **characterized in that** a circular or substantially circular window (12a, 12c) is delimited by a mask, on one face of the substrate, and **in that** an impression (13a, 13c) in the form of a pointed cone is produced by dry etching, especially plasma etching, of the substrate through this window, the deposition of diamond being carried out in this impression.

9. The process as claimed in one of claims 1 to 7 in order to produce a pyramidal diamond tip (13b, 13d), **characterized in that**, in a manner known per se, a square window (12b, 12d) is delimited by a mask on one face of a silicon substrate and **in that** an inverted pyramidal impression (13b, 13d) ((111) planes) is produced by wet etching, especially using KOH, of the silicon substrate.

10. The process as claimed in either of claims 1 and 2, **characterized in that** after deposition of the diamond film it is covered with a support structure (5), or a bond is established between this diamond film and an appropriate support (5).

11. The process as claimed in either of claims 1 and 2, **characterized in that** the substrate is made of silicon or of silicon oxide.

12. The process as claimed in one of the preceding claims, **characterized in that** the diamond film is rendered electrically conductive.

13. The process as claimed in one of claims 1 to 11, **characterized in that** the diamond film is rendered electrically insulating.

14. The process as claimed in any one of the preceding claims, **characterized in that** it comprises providing said component with two diamond tips (3e, 3f), one being a fine tip (3f) in the form of a pointed cone and the other (3e) in the form of an inverted pyramid.

15. The process as claimed in claim 14, **characterized in that** it comprises forming also two separate levers (2e, 2f), fastened to the same base, which are respectively associated with each of the diamond tips (3e, 3f), the lever (2e) of the pyramidal tip (3e) being thicker than the lever (2f) of the fine tip (3f).

16. The process as claimed in claim 14 or 15, **characterized in that** it comprises incorporating piezoresistive elements (27e, 27f) or strain gauges into the levers, in order to measure mechanical stresses.

17. The process as claimed in claim 16, **characterized in that** the piezoresistive elements (27e, 27f) or the strain gauges consist of regions of the silicon lever(s) having undergone a suitable treatment.

18. The process as claimed in one of claims 14 to 17, **characterized in that** it comprises arranging said component in a position close, by arms (39a) which are intended to be snapped, to sides (37a) of a grid (38a) carrying several identical components (4) and intended to be placed against a support grid (38) having the identical geometric configuration, for the bonding of all the components (4a) of a grid against all the supports (5) of a grid, in particular by adhesive bonding.

19. The process as claimed in one of claims 14 to 18, **characterized in that** it comprises depositing a fine diamond tip (3h) in the form of a sharply-pointed cone as an electron source in a similarly shaped cavity (13h) made in a film of suitable material.
